# EUROPEAN PATENT SPECIFICATION

(11) **EP 3 998 522 B1**
(45) Date of publication and mention of the grant of the patent: **28.10.2026**
(21) Application number: 21185779.2
(22) Date of filing: 04.01.2013
(51) Int. Cl.: G06F 1/26, H02J 7/00

(54) **ELECTRIC ENERGY CONTROL MODULE, APPARATUS AND DEVICE**
ELEKTRISCHES ENERGIESTEUERMODUL, GERÄT UND VORRICHTUNG
MODULE, APPAREIL ET DISPOSITIF DE COMMANDE D'ÉNERGIE ÉLECTRIQUE

(30) Priority: 22.05.2012 CN 201210160301
(43) Date of publication of application: 18.05.2022
(62) Document number(s) of the earlier application(s) in accordance with Art. 76 EPC: 13794534.1 / 2 759 904
(73) Proprietor: Huawei Device Co., Ltd., Dongguan, Guangdong 523808 (CN)
(72) Inventor: XU, Shunhai, Shenzhen, Guangdong 518129 (CN)
(74) Representative: Goddar, Heinz J.

(56) References cited:
- WO-A1-2008/146073
- US-A1- 2005 039 060
- US-A1- 2005 057 223
- US-A1- 2006 103 353
- US-B1- 6 211 649

## Description

### TECHNICAL FIELD

The present invention relates to the circuit field, and in particular, to an electric energy control module, apparatus and device.

### BACKGROUND

At present, a USB interface is widely used as one of primary interfaces for communications between devices. Accordingly, simultaneously implementing, by using a USB interface, functions of charging a device power source and supplying power by the device power source to an external device becomes a development trend. For example, some USB wireless network cards, USB wireless modems, and the like all can use USB interfaces for charging and supplying power.

In the prior art, a charging unit for charging a device power source and a power supply unit for supplying power to an external device are generally packaged on a main board of a device.

The inventor finds that a main board of a device in the prior art generates a large amount of heat, which causes temperature increase of the device and impacts performance of the device.

US 2006/0103353 A1 relates to a charge system comprising an electric apparatus that comprises a first rechargeable battery and an adapter for supplying power to the first rechargeable battery, and a charger connected to the electric apparatus and used to charge a second rechargeable battery. The charge system employs a first charging part for charging the first rechargeable battery with the power supplied from the adapter, a first interface for forming a power supplying path and connecting to the charger, a power switch for switching the power supplying path between the electric apparatus and the charger via the first interface, and a first controller for controlling the first charging part and the power switch to enable the first rechargeable battery and the second rechargeable battery to be charged in sequence when the adapter is connected to the electric apparatus in the state that the charger is connected to the electric apparatus, and control the power switch to make the first rechargeable battery and the second rechargeable battery be discharged in sequence when the adapter is not connected to the electric apparatus.

US 2005/0057223 A1 describes an electronic device and its power supply method for charging a battery of the device, which normally operates as a master, through a power supply line, without impairing a function as a master. For example, in an environment where a battery-driven first electronic device and an AC power-driven second electronic device are interconnected via a communication path including a power supply line, it is detected whether or not the capacity of the battery in the first electronic device is sufficient, and in accordance with the result of detection, power supply from the second electronic device is requested. In accordance with the request, electric power from the AC power source of the second electronic device is supplied to the first electronic device via the power supply line, to charge the battery of the first electronic device with the power supply, and it is monitored whether or not the charging has been completed. In accordance with the result of monitoring, the power supply from the second electronic device is stopped, and the first and second electronic devices are returned to a communication stand-by status.

US 6,211,649 B1 discloses a USB cable that has a USB connector connected with a USB port of a PC (Personal Computer), a phone connector connected with a connector of an external connector such as a mobile phone, a control unit, which is situated between the USB connector and the phone connector, for charging a battery of the mobile phone by using power supplied from the USB port of the PC and for transmitting and receiving data with the PC and the mobile phone, and a cable for connecting the USB connector and the phone connector with the control unit respectively.

US 2005/0039060 A1 proposes, when a host 101 is connected to a device 102 via a USB cable 103, the ID terminal on the device 102 is short-circuited to the GND line, hence to reduce the voltage level of the ID terminal. Since power feeding means 109 starts feeding power to the VBus terminal when detecting that the voltage level of the ID terminal turns from "H" to "L", the power is supplied to the host 101 through the VBus line of the USB cable.

WO 2008/146073 A1 provides a method comprising connecting an electronic device having a power source with a second electronic device via a wired interface comprising a first data line and a voltage line, turning off power provided to said voltage line, monitoring the voltage level of said first data line, and determining that said second electronic device has been disconnected if a change from high level to low level is detected. A second method is provided comprising connecting an electronic device with a first electronic device via a wired interface comprising a second data line and a voltage line, connecting a second pull-down resistor with said second data line, monitoring said voltage line, disconnecting said second pull-down resistor from said second data line and connecting a second pull-up resistor with said second data line if power provided on said voltage line is turned off, monitoring a voltage level of said second data line, and determining that said first electronic device has been disconnected if a change from low level to high level is detected.

### SUMMARY

In view of this, a technical problem to be solved in the present invention is to provide an electric energy control module, an apparatus and a device, so that an impact of heat generated by a main board on a temperature of a device can be reduced and performance of the device can be improved. The invention is set out as in the appended claims.

An embodiment of the present invention adopt the following technical solution:
An electrical energy control device, comprising: an electrical energy control module, wherein the electrical energy control module comprises a first interface, wherein the first interface is a detachably connected interface, a charging unit, a first switch, a power source unit, a second switch, a detection control unit. The first interface is connected to an input end of the charging unit by using the first switch, wherein an output end of the charging unit is connected to an input end of the power source unit. An output end of the power source unit is connected to the first interface by using the second switch. An input end of the detection control unit is connected to the first interface. A first output end of the detection control unit is connected to a control end of the first switch. A second output end of the detection control unit is connected to a control end of the second switch. The first interface is configured to connect to an electric energy supply end of an electric energy supply device when the power source unit is charged; and when power is supplied to an external device, connect to an electric energy input end of a power supply unit that supplies power to the external device, wherein the power supply unit is located outside the electrical energy control device. The charging unit is configured to, when the first switch is closed and the second switch is open, receive electric energy supplied by the electric energy supply device, so as to charge the power source unit. The power source unit is configured to store the electric energy when the first switch is closed; and output the electric energy when the second switch is closed. The detection control unit is configured to detect a connection status of the first interface, and control switch statuses of the first switch and the second switch according to the connection status of the first interface. The detection control unit is specifically configured to control the first switch to be closed and the second switch to be opened when detecting that the first interface is connected to the electric energy supply end of the electric energy supply device, and to control the first switch to be opened and the second switch to be closed when detecting that the first interface is connected to the electric energy input end of the power supply unit.

The invention also concerns a system comprising an electrical energy control device according to the previous embodiment and a power supply module, the power supply module including:
a second interface, where the second interface is a detachably connected interface;
a power supply unit, wherein the second interface is connected to an input end of a power supply unit; and an output end of the power supply unit is configured to connect to an electric energy input end of an external device; wherein the first interface is further configured to connect to the second interface when power is supplied to the external device. The detection control unit is specifically configured to control the first switch to be closed and the second switch to be opened when detecting that the first interface is connected to the electric energy supply end of the electric energy supply device, and to control the first switch to be opened and the second switch to be closed when detecting that the first interface is connected to the electric energy input end of the power supply unit

Technical effects of the foregoing technical solutions are analyzed as follows:
A first module and a second module are provided, where the first module includes a first interface, the second module includes a second interface, and the first interface and the second interface are detachably connected interfaces that cooperate with each other. The second module further includes: the second interface, connected to an input end of a power supply unit, where an output end of the power supply unit is configured to connect to an electric energy input end of an external device. The first module further includes: the first interface, connected to an input end of a charging unit by using a first switch, where an output end of the charging unit is connected to an input end of a power source unit; an output end of the power source unit is connected to the first interface by using a second switch; and an input end of a detection control unit is connected to the first interface, a first output end is connected to a control end of the first switch, and a second output end is connected to a control end of the second switch. The first interface is configured to: connect to, when the power source unit is charged, an electric energy supply end of an electric energy supply device; and connect to the second interface when power is supplied to the external device. The charging unit is configured to, when the first switch is closed, receive electric energy supplied by the electric energy supply device, so as to charge the power source unit. The power supply unit is configured to receive, when the second switch is closed, electric energy output by the power source unit, so as to charge the external device. The power source unit is configured to: store the electric energy when the first switch is closed; and output the electric energy when the second switch is closed. The detection control unit is configured to detect a connection status of the first interface, and control switch statuses of the first switch and the second switch according to the connection status of the first interface. The power supply unit is disposed outside a device and is connected to the first interface by using the second interface only when power needs to be supplied to the external device. The power supply unit receives the electric energy output by the power source unit and supplies power to the external device, which can reduce heat generated by a main board, thereby alleviating an impact on a temperature of the device and improving performance of the device.

### BRIEF DESCRIPTION OF DRAWINGS

FIG. 1 is a schematic structural diagram of an electric energy control apparatus according to an embodiment of the present invention;
FIG. 2 shows an example of an implementation structure of a first module according to an embodiment of the present invention; and
FIG. 3 shows an example of an implementation structure of a second module according to an embodiment of the present invention.

### DESCRIPTION OF EMBODIMENTS

The inventor finds that in the prior art, a charging unit and a power supply unit are both packaged on a main board of a device. However, switching needs to be performed between the charging unit and the power supply unit; therefore a large amount of heat is inevitably generated due to such switching, and heat is also inevitably generated during operation of the charging unit and the power supply unit, which is one of reasons for a large amount of heart generated by a main board in the prior art.

According to the foregoing, in the embodiments of the present invention, a charging unit and a power supply unit are separate, rather than being both disposed on a main board of a device, which reduces a source of generating heat on the main board, reduces heat generated by the main board, and extends a service life of the main board.

The following describes in detail implementation of an electric energy control apparatus and device according to the embodiments of the present invention with reference to the accompanying drawings.

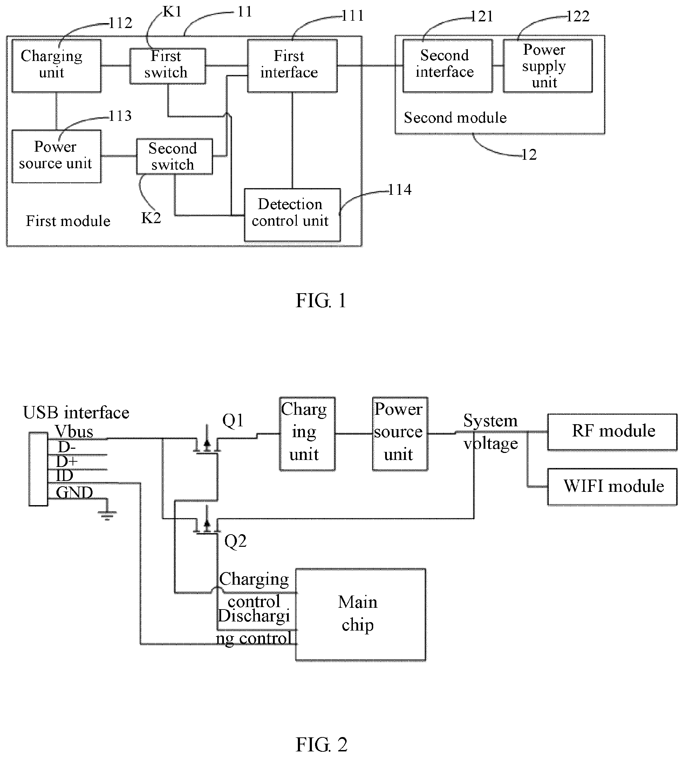

FIG. 1 is a schematic structural diagram of an electric energy control apparatus according to an embodiment of the present invention. As shown in FIG. 1, the apparatus includes a first module 11 and a second module 12, where
the first module 11 includes a first interface 111, the second module 12 includes a second interface 121, and the first module 111 and the second module 121 are detachably connected interfaces that cooperate with each other.

The second module 12 further includes:
the second interface 121, connected to an input end of a power supply unit 122, where an output end of the power supply unit 122 is configured to connect to an electric energy input end of an external device.

The first module 11 further includes:
the first interface 111, connected to an input end of a charging unit 112 by using a first switch K1, where an output end of the charging unit 112 is connected to an input end of a power source unit 113; an output end of the power source unit 113 is connected to the first interface by using a second switch K2; and an input end of a detection control unit 114 is connected to the first interface 111, a first output end is connected to a control end of the first switch K1, and a second output end is connected to a control end of the second switch K2.

The first interface 111 is configured to: connect to an electric energy supply end of an electric energy supply device when the power source unit 113 is charged; and connect to the second interface 121 when power is supplied to the external device.

The charging unit 112 is configured to, when the first switch K1 is closed, receive electric energy supplied by the electric energy supply device, so as to charge the power source unit 113.

The power supply unit 122 is configured to, when the second switch K2 is closed, receive electric energy output by the power source unit 113, so as to supply power to the external device.

The power source unit 113 is configured to: store the electric energy when the first switch K1 is closed; and output the electric energy when the second switch K2 is closed.

The detection control unit 114 is configured to detect a connection status of the first interface 111, and control switch statuses of the first switch K1 and the second switch K2 according to the connection status of the first interface 111.

In the embodiment of the present invention shown in FIG. 1, the power supply unit is disposed outside a device and is connected to the first interface by using the second interface only when power needs to be supplied to an external device. The power supply unit receives electric energy output by the power source unit and supplies power to the external device, which reduces heat generated by a main board, thereby alleviating an impact on a temperature of the device and improving performance of the device.

The detection control unit 114 is specifically configured to: control the first switch K1 to be closed and the second switch K2 to be opened when detecting that the first interface 111 is connected to the electric energy supply end of the electric energy supply device; and control the first switch K1 to be opened and the second K2 to be closed when detecting that the first interface 111 is connected to the second interface 121.

The first switch K1 and the second switch K2 may be implemented separately by using single-pole single-throw switches, or may be implemented by using a single-pole double-throw switch, or may be implemented separately by using field-effect transistors. Control ends of the first switch K1 and the second switch K2 are grid electrodes of the field-effect transistors. In such a case, the detection control unit 114 may control over opening or closing of the field-effect transistor by outputting a corresponding driving signal to the grid electrode of the field-effect transistor.

In addition, the first interface and the second interface may be implemented by using USB interfaces. For example, one interface serves as a USB slot, and the other interface serves as a USB plug, so as to implement detachable connection.

In such a case, the detection control unit 114 may implement detection on the connection status of the first interface 111 by detecting a level of an ID pin of the first interface 111. For example, it may be preset that when the level of the ID pin is a high level, it indicates that the power source unit is charged, and when the level of the ID pin is a low level, it indicates that the power source unit supplies power to the external device. Accordingly, in a practical application, corresponding levels of an ID pin may be output in two different application environments, so that the detection control unit 114 can detect a corresponding level, control a corresponding switch to be closed, and implement a charging or discharging function. Accordingly, the detection control unit 114 may specifically be configured to: detect the level of the ID pin of the first interface 111; control the first switch K1 to be closed and the switch K2 to be opened when the level of the ID pin is a high level; and control the first switch K1 to be opened and the second switch K2 to be closed when the level of the ID pin is a low level.

In a practical application, the first module 11 may be disposed on a PCB board of a device, and the second module may be disposed in a cable or a board outside the device.

The charging unit and the power supply unit are no longer disposed on a main board of a same device. Therefore, difficulty in laying out the main board is reduced. In addition, an area of the main board of the device may also be decreased, thereby decreasing a size of the device.

In addition, the power supply unit is disposed outside the device, and therefore, a heat source that generates heat on the main board of the device is reduced and heat generated by the main board is reduced, a service life of the main board is extended, and amplitude of temperature increase of the device is reduced.

Moreover, the power supply unit is not disposed on the main board, which may alleviate an impact of the power supply unit on layout and performance of a radio frequency part on the main board.

In the electric energy control apparatus according to the embodiment of the present invention, the first module 11 and the second module 12 may separately exist.

An embodiment of the present invention further provides an electric energy control module. Implementation of the electric energy control module is the same as a structure of the first module shown in FIG. 1. However, for the electric energy control module, a first interface is configured to connect to an electric energy supply end of an electric energy supply device when a power source unit is charged, and when power is supplied to an external device, connect to an electric energy input end of a power supply unit that supplies power to the external device, where the power supply unit is located outside the electric energy control module and the electric energy input end herein may be implemented by using the second interface. For implementation of the electric energy control module in this embodiment of the present invention, reference may be made to the foregoing description of the first module, which is not described herein again.

The electric energy control module may be disposed on a certain device that needs to be charged and supply power to an external device, such as a portable terminal.

An embodiment of the present invention further provides a power supply module. Implementation of the power supply module is the same as a structure of the second module shown in FIG. 1, which includes:
a second interface 121, where the second interface 121 is a detachably connected interface; and the second interface 121 is configured to connect to an electric energy output interface of an electric energy output device that can output electric energy, where the electric energy output device herein may be a device in which the foregoing electric energy control module is located, and is used together with the electric energy control module; or the electric energy output device may be another device that can output electric energy, and in such a case, it is required that the electric energy output interface of the electric energy output device can be used together with the second interface to implement transmission of electric energy from the electric energy output device to the power supply module.

The second interface 121 is connected to an input end of a power supply unit 122; and an output end of the power supply unit 122 is configured to connect to an electric energy input end of an external device.

The power supply unit 122 is configured to receive electric energy through the second interface 121, so as to supply power to the external device.

The power supply module is disposed in a cable or a board outside the electric energy output device.

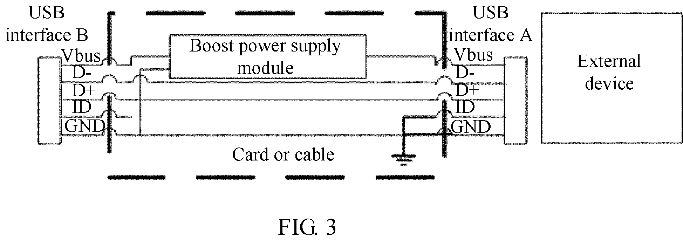

In addition, specific implementation structures of the charging unit and the power supply unit in the embodiment of the present invention are not limited, as long as functions of charging the power source unit and supplying power to the external device can be implemented. For a purpose of clarity, the following FIG. 2 and FIG. 3 illustrate specific implementation structures of a charging unit and a power supply unit, respectively.

FIG. 2 is a schematic diagram of an implementation structure of a first module according to an embodiment of the present invention, as shown in FIG. 2, which includes:
The first module may be implemented by using a board, where a USB port shown in FIG 2 is a standard 5-wire USB interface, may externally connect to a standard USB cable, and may be used for data communications by connecting to a standard PC or the like. Two field-effect transistors, namely a first field-effect transistor Q1 and a second field-effect transistor Q2, are used on the board to perform separation and switching on a circuit of a power source of the USB port, where the first field-effect transistor Q1 and the second field-effect transistor Q2 correspond to the first switch and the second switch. The control permission of switching is determined by a main chip of the board and the main chip corresponds to the detection control unit. After startup, the main chip tacitly approves that the first field-effect transistor Q1 is connected and the second field-effect transistor Q2 is disconnected, and tacitly approves that a charging unit is connected. The charging unit charges a power source unit, so that the charging unit supplies a system voltage to the first switch, the second switch, and other modules such as an RF module and a WIFI module on the board, to ensure system security. When an external cable is inserted, the main chip detects a level of an ID pin of an inserted signal, and according to a USB protocol, if the level of the ID pin is a low level, enters an OTG mode, in which the first field-effect transistor Q1 is disconnected, the second field-effect transistor Q2 is connected, and the system voltage is connected to an external board through a USB port on the board; and if the level of the ID pin is high, an original mode is maintained, in which power is externally obtained and the charging unit charges the power source unit.

FIG. 3 is a schematic diagram of an implementation structure of a second module according to an embodiment of the present invention. As shown in FIG. 3, the second module is implemented through a principle of an external connection cable card.

A pin D-/D+ is directly connected without any processing; a pin Vbus is connected to a circuit of a boost power supply module, where the boost power supply module corresponds to the power supply unit and the system voltage of the first module is boosted to a standard 5 V voltage; and a USB port B corresponds to the second interface and connects to another corresponding interface of a device that can communicate with and supply power to an external device, for example, connects to a first interface of a device that includes a first module, whereas an ID signal of a USB port A that is close to the external device is directly grounded and the power supply unit supplies power to the external device through the USB port A. After the power source is transformed by the second module, data communications can be normally performed and a standard 5 V power source can be supplied to another device. The external device can be implemented by using a certain board.

The foregoing descriptions are merely exemplary embodiments of the present invention. It should be noted that several improvements and polishing may also be made by a person of ordinary skill in the art without departing from the principle of the present invention, and such improvements and polishing shall also fall within the protection scope of the present invention.

## Claims

1. An electrical energy control device, comprising: an electrical energy control module (11), wherein
the electrical energy control module (11) comprises:
a first interface (111), wherein the first interface (111) is a detachably connected interface;
a charging unit (112);
a first switch (K1);
a power source unit (113);
a second switch (K2); and
a detection control unit (114);
wherein
the first interface (111) is connected to an input end of the charging unit (112) by using the first switch (K1), wherein an output end of the charging unit (112) is connected to an input end of the power source unit (113); an output end of the power source unit (113) is connected to the first interface (111) by using the second switch (K2); an input end of the detection control unit (114) is connected to the first interface (111), a first output end of the detection control unit (114) is connected to a control end of the first switch (K1), and a second output end of the detection control unit (114) is connected to a control end of the second switch (K2);
the first interface (111) is configured to: connect to an electric energy supply end of an electric energy supply device when the power source unit (113) is charged; and when power is supplied to an external device, connect to an electric energy input end of a power supply unit (122) that supplies power to the external device, wherein the power supply unit (122) is located outside the electrical energy control device;
the charging unit (112) is configured to, when the first switch (K1) is closed and the second switch (K2) is open, receive electric energy supplied by the electric energy supply device, so as to charge the power source unit (113);
the power source unit (113) is configured to: store the electric energy when the first switch (K1) is closed; and output the electric energy when the second switch (K2) is closed; and
the detection control unit (114) is configured to: detect a connection status of the first interface (111), and control switch statuses of the first switch (K1) and the second switch (K2) according to the connection status of the first interface (111),
wherein the detection control unit (114) is specifically configured to:
control the first switch (K1) to be closed and the second switch (K2) to be opened when detecting that the first interface (111) is connected to the electric energy supply end of the electric energy supply device; and
control the first switch (K1) to be opened and the second switch (K2) to be closed when detecting that the first interface (111) is connected to the electric energy input end of the power supply unit (122).

2. The electrical energy control device according to claim 1, wherein the first interface (111) is a USB interface.

3. The electrical energy control device according to claim 1 or 2, wherein the first module (11) is disposed on a PCB board of the electrical energy control device.

4. The electrical energy control device according to any one of claims 1 to 3, wherein the detection control unit (114) is specifically configured to:
detect a level of an ID pin of the first interface (111); control the first switch (K1) to be closed and the second switch (K2) to be opened when the level of the ID pin is a high level such that when the level of the ID pin is a high level, it indicates that the power source unit (113) is charged; and control the first switch (K1) to be opened and the second switch (K2) to be closed when the level of the ID pin is a low level such that when the level of the ID pin is a low level, it indicates that the power source unit (113) supplies power to the external device.

5. The electrical energy control device according to any one of claims 1 to **4,** wherein the first switch (K1) and the second switch (K2) are implemented separately by using single-pole single-throw switches, or the first switch (K1) and the second switch (K2) are implemented by using a single-pole double-throw switch, or the first switch (K1) and the second switch (K2) are implemented separately by using field-effect transistors.

6. A system, comprising: an electrical energy control device according to any of the claims 1 to 5 and a power supply module (12), wherein
the power supply module (12) comprises:
a second interface (121), wherein the second interface (121) is a detachably connected interface; and
a power supply unit (122), wherein the second interface (121) is connected to an input end of the power supply unit (122), an output end of the power supply unit (122) is configured to connect to an electric energy input end of an external device;
wherein
the first interface (111) is further configured to: connect to the second interface (121) when power is supplied to the external device,
wherein the detection control unit (114) is specifically configured to:
control the first switch (K1) to be closed and the second switch (K2) to be opened when detecting that the first interface (111) is connected to the electric energy supply end of the electric energy supply device; and
control the first switch (k1) to be opened and the second switch (K2) to be closed when detecting that the first interface (111) is connected to the second interface (121).

7. The system according to claim 6, wherein the first interface (111) and the second interface (121) are USB interfaces.

8. The system according to claim 6 or 7, wherein the electrical energy control module (11) is disposed on a PCB board of the electrical energy control device; and
the power supply module (12) is disposed in a cable or a board outside the electrical energy control device.

9. The system according to any one of claims 6 to 8, wherein the detection control unit (114) is specifically configured to:
detect a level of an ID pin of the first interface (111); control the first switch (K1) to be closed and the second switch (K2) to be opened when the level of the ID pin is a high level such that when the level of the ID pin is a high level, it indicates that the power source unit (113) is charged; and control the first switch (K1) to be opened and the second switch (K2) to be closed when the level of the ID pin is a low level such that when the level of the ID pin is a low level, it indicates that the power source unit (113) supplies power to the external device.

10. The system according to any one of claims 6 to 9, wherein the first switch (K1) and the second switch (K2) are implemented separately by using single-pole single-throw switches, or the first switch (K1) and the second switch (K2) are implemented by using a single-pole double-throw switch, or the first switch (K1) and the second switch (K2) are implemented separately by using field-effect transistors.

## Patentansprüche

1. Stromsteuervorrichtung, die Folgendes umfasst: ein Stromsteuermodul (11), wobei das Stromsteuermodul (11) umfasst:
eine erste Schnittstelle (111), wobei die erste Schnittstelle (111) eine lösbar verbundene Schnittstelle ist;
eine Ladeeinheit (112);
einen ersten Schalter (K1);
eine Leistungsquelleneinheit (113);
einen zweiten Schalter (K2); und
eine Detektionssteuereinheit (114);
wobei
die erste Schnittstelle (111) mit einem Eingangsende der Ladeeinheit (112) unter Verwendung des ersten Schalters (K1) verbunden ist, wobei ein Ausgangsende der Ladeeinheit (112) mit einem Eingangsende der Leistungsquelleneinheit (113) verbunden ist; ein Ausgangsende der Leistungsquelleneinheit (113) mit der ersten Schnittstelle (111) unter Verwendung des zweiten Schalters (K2) verbunden ist; ein Eingangsende der Detektionssteuereinheit (114) mit der ersten Schnittstelle (111) verbunden ist, ein erstes Ausgangsende der Detektionssteuereinheit (114) mit einem Steuerende des ersten Schalters (K1) verbunden ist und ein zweites Ausgangsende der Detektionssteuereinheit (114) mit einem Steuerende des zweiten Schalters (K2) verbunden ist;
die erste Schnittstelle (111) ausgelegt ist zum: Verbinden mit einem Stromeingangsende einer Stromversorgungsvorrichtung, wenn die Leistungsquelleneinheit (113) geladen wird; und wenn Leistung an eine externe Vorrichtung geliefert wird, Verbinden mit einem Stromeingangsende einer Leistungsversorgungseinheit (122), die Leistung an die externe Vorrichtung liefert, wobei sich die Leistungsversorgungseinheit (122) außerhalb der Stromsteuervorrichtung befindet;
die Ladeeinheit (112) dafür ausgelegt ist, wenn der erste Schalter (K1) geschlossen ist und der zweite Schalter (K2) offen ist, elektrische Energie aufzunehmen, die durch die Stromversorgungsvorrichtung geliefert wird, um die Leistungsquelleneinheit (113) zu laden;
die Leistungsquelleneinheit (113) ausgelegt ist zum: Speichern des Stroms, wenn der erste Schalter (K1) geschlossen ist; und Abgeben des Stroms, wenn der zweite Schalter (K2) geschlossen ist; und
die Detektionssteuereinheit (114) ausgelegt ist zum: Detektieren eines Verbindungsstatus der ersten Schnittstelle (111) und Steuern von Schalterzuständen des ersten Schalters (K1) und des zweiten Schalters (K2) gemäß dem Verbindungsstatus der ersten Schnittstelle (111),
wobei die Detektionssteuereinheit (114) speziell ausgelegt ist zum:
Steuern des ersten Schalters (K1) derart, dass er geschlossen wird, und des zweiten Schalters (K2) derart, dass er geöffnet wird, wenn detektiert wird, dass die erste Schnittstelle (111) mit dem Stromversorgungsende der Stromversorgungsvorrichtung verbunden ist; und
Steuern des ersten Schalters (K1) derart, dass er geöffnet wird, und des zweiten Schalters (K2) derart, dass er geschlossen wird, wenn detektiert wird, dass die erste Schnittstelle (111) mit dem Stromeingangsende der Leistungsversorgungseinheit (122) verbunden ist.

2. Stromsteuervorrichtung nach Anspruch 1, wobei die erste Schnittstelle (111) eine USB-Schnittstelle ist.

3. Stromsteuervorrichtung nach Anspruch 1 oder 2, wobei das erste Modul (11) auf einer Leiterplatte der Stromsteuervorrichtung angeordnet ist.

4. Stromsteuervorrichtung nach einem der Ansprüche 1 bis 3, wobei die Detektionssteuereinheit (114) speziell ausgelegt ist zum:
Detektieren eines Pegels eines ID-Pins der ersten Schnittstelle (111); Steuern des ersten Schalters (K1) derart, dass er geschlossen wird, und des zweiten Schalters (K2) derart, dass er geöffnet wird, wenn der Pegel des ID-Pins ein Hoch-Pegel ist, so dass, wenn der Pegel des ID-Pins ein Hoch-Pegel ist, angezeigt wird, dass die Leistungsquelleneinheit (113) geladen ist; und Steuern des ersten Schalters (K1) derart, dass er geöffnet wird, und des zweiten Schalters (K2) derart, dass er geschlossen wird, wenn der Pegel des ID-Pins ein Niedrig-Pegel ist, so dass, wenn der Pegel des ID-Pins ein Niedrig-Pegel ist, angezeigt wird, dass die Leistungsquelleneinheit (113) die externe Vorrichtung mit Strom versorgt.

5. Stromsteuervorrichtung nach einem der Ansprüche 1 bis 4, wobei der erste Schalter (K1) und der zweite Schalter (K2) separat unter Verwendung einpoliger Einwegschalter implementiert sind oder der erste Schalter (K1) und der zweite Schalter (K2) unter Verwendung eines einpoligen Wechselschalters implementiert sind oder der erste Schalter (K1) und der zweite Schalter (K2) separat unter Verwendung von Feldeffekttransistoren implementiert sind.

6. System, das Folgendes umfasst: eine Stromsteuervorrichtung nach einem der Ansprüche 1 bis 5 und ein Leistungsversorgungsmodul (12), wobei
das Leistungsversorgungsmodul (12) Folgendes umfasst:
eine zweite Schnittstelle (121), wobei die zweite Schnittstelle (121) eine lösbar verbundene Schnittstelle ist; und
eine Leistungsversorgungseinheit (122), wobei die zweite Schnittstelle (121) mit einem Eingangsende der Leistungsversorgungseinheit (122) verbunden ist, ein Ausgangsende der Leistungsversorgungseinheit (122) dazu ausgelegt ist, mit einem Stromeingangsende einer externen Vorrichtung verbunden zu werden;
wobei
die erste Schnittstelle (111) ferner ausgelegt ist zum: Verbinden mit der zweiten Schnittstelle (121), wenn der externen Vorrichtung Leistung zugeführt wird,
wobei die Detektionssteuereinheit (114) speziell ausgelegt ist zum:
Steuern des ersten Schalters (K1) derart, dass er geschlossen wird, und des zweiten Schalters (K2) derart, dass er geöffnet wird, wenn detektiert wird, dass die erste Schnittstelle (111) mit dem Stromversorgungsende der Stromversorgungsvorrichtung verbunden ist; und
Steuern des ersten Schalters (K1) derart, dass er geöffnet wird, und des zweiten Schalters (K2) derart, dass er geschlossen wird, wenn detektiert wird, dass die erste Schnittstelle (111) mit der zweiten Schnittstelle (121) verbunden ist.

7. System nach Anspruch 6, wobei die erste Schnittstelle (111) und die zweite Schnittstelle (121) USB-Schnittstellen sind.

8. System nach Anspruch 6 oder 7, wobei das Stromsteuermodul (11) auf einer Leiterplatte der Stromsteuervorrichtung angeordnet ist; und
das Leistungsversorgungsmodul (12) in einem Kabel oder einer Platine außerhalb der Stromsteuervorrichtung angeordnet ist.

9. System nach einem der Ansprüche 6 bis 8, wobei die Detektionssteuereinheit (114) speziell ausgelegt ist zum:
Detektieren eines Pegels eines ID-Pins der ersten Schnittstelle (111); Steuern des ersten Schalters (K1) derart, dass er geschlossen wird, und des zweiten Schalters (K2) derart, dass er geöffnet wird, wenn der Pegel des ID-Pins ein Hoch-Pegel ist, so dass, wenn der Pegel des ID-Pins ein Hoch-Pegel ist, angezeigt wird, dass die Leistungsquelleneinheit (113) geladen ist; und Steuern des ersten Schalters (K1) derart, dass er geöffnet wird, und des zweiten Schalters (K2) derart, dass er geschlossen wird, wenn der Pegel des ID-Pins ein Niedrig-Pegel ist, so dass, wenn der Pegel des ID-Pins ein Niedrig-Pegel ist, angezeigt wird, dass die Leistungsquelleneinheit (113) die externe Vorrichtung mit Strom versorgt.

10. System nach einem der Ansprüche 6 bis 9, wobei der erste Schalter (K1) und der zweite Schalter (K2) separat unter Verwendung einpoliger Einwegschalter implementiert sind oder der erste Schalter (K1) und der zweite Schalter (K2) unter Verwendung eines einpoligen Wechselschalters implementiert sind oder der erste Schalter (K1) und der zweite Schalter (K2) separat unter Verwendung von Feldeffekttransistoren implementiert sind.

## Revendications

1. Dispositif de contrôle d'énergie électrique, comprenant : un module de contrôle d'énergie électrique (11),
le module de contrôle d'énergie électrique (11) comprenant :
une première interface (111), la première interface (111) étant une interface connectée de façon amovible ;
une unité de charge (112) ;
un premier commutateur (K1) ;
une unité source d'électricité (113) ;
un deuxième commutateur (K2) ; et
une unité de contrôle de détection (114) ;
dans lequel
la première interface (111) est connectée à une extrémité d'entrée de l'unité de charge (112) au moyen du premier commutateur (K1), une extrémité de sortie de l'unité de charge (112) étant connectée à une extrémité d'entrée de l'unité source d'électricité (113) ; une extrémité de sortie de l'unité source d'électricité (113) est connectée à la première interface (111) au moyen du deuxième commutateur (K2) ; une extrémité d'entrée de l'unité de contrôle de détection (114) est connectée à la première interface (111), une première extrémité de sortie de l'unité de contrôle de détection (114) est connectée à une extrémité de contrôle du premier commutateur (K1), et une deuxième extrémité de sortie de l'unité de contrôle de détection (114) est connectée à une extrémité de contrôle du deuxième commutateur (K2) ;
la première interface (111) est conçue pour : se connecter à une extrémité d'alimentation en énergie électrique d'un dispositif d'alimentation en énergie électrique lorsque l'unité source d'électricité (113) est chargée ; et lorsqu'un dispositif externe est alimenté électriquement, se connecter à une extrémité d'entrée d'énergie électrique d'une unité d'alimentation électrique (122) qui alimente électriquement le dispositif externe, l'unité d'alimentation électrique (122) se trouvant à l'extérieur du dispositif de contrôle d'énergie électrique ;
l'unité de charge (112) est conçue pour, lorsque le premier commutateur (K1) est fermé et le deuxième commutateur (K2) est ouvert, recevoir de l'énergie électrique fournie par le dispositif d'alimentation en énergie électrique, de manière à charger l'unité source d'électricité (113) ;
l'unité source d'électricité (113) est conçue pour : stocker l'énergie électrique lorsque le premier commutateur (K1) est fermé ; et délivrer l'énergie électrique lorsque le deuxième commutateur (K2) est fermé ; et
l'unité de contrôle de détection (114) est conçue pour : détecter un état de connexion de la première interface (111), et contrôler des états de commutation du premier commutateur (K1) et du deuxième commutateur (K2) en fonction de l'état de connexion de la première interface (111),
l'unité de contrôle de détection (114) étant spécifiquement conçue pour :
commander la fermeture du premier commutateur (K1) et l'ouverture du deuxième commutateur (K2) lors de la détection que la première interface (111) est connectée à l'extrémité d'alimentation en énergie électrique du dispositif d'alimentation en énergie électrique ; et
commander l'ouverture du premier commutateur (K1) et la fermeture du deuxième commutateur (K2) lors de la détection que la première interface (111) est connectée à l'extrémité d'entrée d'énergie électrique de l'unité d'alimentation électrique (122).

2. Dispositif de contrôle d'énergie électrique selon la revendication 1, dans lequel la première interface (111) est une interface USB.

3. Dispositif de contrôle d'énergie électrique selon la revendication 1 ou 2, le premier module (11) étant disposé sur une carte PCB du dispositif de contrôle d'énergie électrique.

4. Dispositif de contrôle d'énergie électrique selon l'une quelconque des revendications 1 à 3, dans lequel l'unité de contrôle de détection (114) est spécifiquement conçue pour :
détecter un niveau d'une broche d'identification de la première interface (111) ; commander la fermeture du premier commutateur (K1) et l'ouverture du deuxième commutateur (K2) lorsque le niveau de la broche d'identification est un niveau haut de telle sorte que, lorsque le niveau de la broche d'identification est un niveau haut, il indique que l'unité source d'électricité (113) est chargée ; et commander l'ouverture du premier commutateur (K1) et la fermeture du deuxième commutateur (K2) lorsque le niveau de la broche d'identification est un niveau bas de telle sorte que, lorsque le niveau de la broche d'identification est un niveau bas, il indique que l'unité source d'électricité (113) alimente électriquement le dispositif externe.

5. Dispositif de contrôle d'énergie électrique selon l'une quelconque des revendications 1 à 4, dans lequel le premier commutateur (K1) et le deuxième commutateur (K2) sont mis en œuvre séparément au moyen de commutateurs unipolaires unidirectionnels, ou bien le premier commutateur (K1) et le deuxième commutateur (K2) sont mis en œuvre au moyen d'un commutateur unipolaire bidirectionnel, ou bien le premier commutateur (K1) et le deuxième commutateur (K2) sont mis en œuvre séparément au moyen de transistors à effet de champ.

6. Système, comprenant : un dispositif de contrôle d'énergie électrique selon l'une quelconque des revendications 1 à 5 et un module d'alimentation électrique (12),
le module d'alimentation électrique (12) comprenant :
une deuxième interface (121), la deuxième interface (121) étant une interface connectée de façon amovible ; et
une unité d'alimentation électrique (122), la deuxième interface (121) étant connectée à une extrémité d'entrée de l'unité d'alimentation électrique (122), une extrémité de sortie de l'unité d'alimentation électrique (122) étant conçue pour se connecter à une extrémité d'entrée d'énergie électrique d'un dispositif externe ;
dans lequel
la première interface (111) est en outre conçue pour : se connecter à la deuxième interface (121) lorsque le dispositif externe est alimenté électriquement,
l'unité de contrôle de détection (114) étant spécifiquement conçue pour :
commander la fermeture du premier commutateur (K1) et l'ouverture du deuxième commutateur (K2) lors de la détection que la première interface (111) est connectée à l'extrémité d'alimentation en énergie électrique du dispositif d'alimentation en énergie électrique ; et
commander l'ouverture du premier commutateur (k1) et la fermeture du deuxième commutateur (K2) lors de la détection que la première interface (111) est connectée à la deuxième interface (121).

7. Système selon la revendication 6, dans lequel la première interface (111) et la deuxième interface (121) sont des interfaces USB.

8. Système selon la revendication 6 ou 7, dans lequel le module de contrôle d'énergie électrique (11) est disposé sur une carte PCB du dispositif de contrôle d'énergie électrique ; et
le module d'alimentation électrique (12) est disposé dans un câble ou une carte à l'extérieur du dispositif de contrôle d'énergie électrique.

9. Système selon l'une quelconque des revendications 6 à 8, dans lequel l'unité de contrôle de détection (114) est spécifiquement conçue pour :
détecter un niveau d'une broche d'identification de la première interface (111) ; commander la fermeture du premier commutateur (K1) et l'ouverture du deuxième commutateur (K2) lorsque le niveau de la broche d'identification est un niveau haut de telle sorte que, lorsque le niveau de la broche d'identification est un niveau haut, il indique que l'unité source d'électricité (113) est chargée ; et commander l'ouverture du premier commutateur (K1) et la fermeture du deuxième commutateur (K2) lorsque le niveau de la broche d'identification est un niveau bas de telle sorte que, lorsque le niveau de la broche d'identification est un niveau bas, il indique que l'unité source d'électricité (113) alimente électriquement le dispositif externe.

10. Système selon l'une quelconque des revendications 6 à 9, dans lequel le premier commutateur (K1) et le deuxième commutateur (K2) sont mis en œuvre séparément au moyen de commutateurs unipolaires unidirectionnels, ou bien le premier commutateur (K1) et le deuxième commutateur (K2) sont mis en œuvre au moyen d'un commutateur unipolaire bidirectionnel, ou bien le premier commutateur (K1) et le deuxième commutateur (K2) sont mis en œuvre séparément au moyen de transistors à effet de champ.
